Europäisches Patentamt

**European Patent Office**

**Office européen des brevets**

(19)

(11) Veröffentlichungsnummer : **0 130 275 B1**

(12) **EUROPÄISCHE PATENTSCHRIFT**

(45) Veröffentlichungstag der Patentschrift :
30.11.88

(21) Anmeldenummer : **84102711.3**

(22) Anmeldetag : **13.03.84**

(51) Int. Cl.⁴ : **B 60 N   1/08**

(54) **Längsführung, insbesondere für Längsverstellvorrichtungen von Fahrzeugsitzen.**

(30) Priorität : **01.06.83 DE 3319815**
**16.06.83 DE 3321869**

(43) Veröffentlichungstag der Anmeldung :
**09.01.85 Patentblatt 85/02**

(45) Bekanntmachung des Hinweises auf die Patenterteilung : **30.11.88 Patentblatt 88/48**

(84) Benannte Vertragsstaaten :
**DE FR GB SE**

(56) Entgegenhaltungen :
**GB-A- 1 485 050**
**GB-A- 2 074 442**
**GB-A- 2 108 380**
**GB-A- 2 108 836**
**US-A- 2 702 582**

(73) Patentinhaber : **C. Rob. Hammerstein GmbH**
**Postfach 13 01 18 Merscheiderstrasse 167**
**D-5650 Solingen 13 (DE)**

(72) Erfinder : **Bauer, Heinz**
**Hammerstrasse 9**
**D-5650 Solinegen 11 (DE)**
Erfinder : **Becker, Burckhard, Dipl.-Ing.**
**Obenkatternberg 25**
**D-5650 Solingen (DE)**
Erfinder : **Frohnhaus, Ernst-Reiner**
**Hammerstrasse 13**
**D-5650 Solingen 11 (DE)**
Erfinder : **Gedig, Alfred, Dipl.-Ing.**
**Hammerstrasse 28**
**D-5650 Solingen 11 (DE)**

(74) Vertreter : **Bauer, Wulf, Dr.**
**Wolfgang-Müller-Strasse 12**
**D-5000 Köln 51 (Marienburg) (DE)**

Jouve, 18, rue St-Denis, 75001 Paris, France

EP 0 130 275 B1

## Beschreibung

Die Erfindung bezieht sich auf eine Längsführung, insbesondere für Längsverstellvorrichtungen von Fahrzeugsitzen und vorzugsweise für motorgetriebene Längsverstellvorrichtungen, mit zwei länglichen, gegeneinander verschiebbaren und ineinander geführten Schienen,

- die über zwei Reihen Wälzkörper, insbesondere Kugeln, welche auf einer Profildiagonalen diametral gegenüber liegen, miteinander in Verbindung stehen und unter Vorspannung aneinanderliegen,

- von denen eine als umgriffene, die andere als umgreifende Schiene ausgebildet ist,

- die jeweils ein Winkelprofil mit im wesentlichen rechtwinklig zueinander stehenden und vorzugsweise gleichlangen Armen aufweisen, wobei im Falle der umgreifenden Schiene am Ende jedes Arms ein Führungsflansch in Richtung des jeweils anderen Arms vorspringt und dadurch eine innenliegende Führungsrille für Kugeln einer Reihe ausgebildet wird und im Falle der umgriffenen Schiene mit jedem Arm ein gebogener Führungsflansch mit einer außenliegenden Führungsrille verbunden ist, und

- die gemeinsam einen nahezu rechteckförmigen Innenraum umschließen.

Bei dieser, aus der DE-A-31 43 431 der Anmelderin bekannten Längsführung läßt sich im Innenraum, der einen relativ großen Querschnitt aufweist, günstig eine motorgetriebene Verstellvorrichtung unterbringen. Der Innenraum nimmt dabei beispielsweise eine Antriebswelle, ein von dieser angetriebenes Ritzel und eine Zahnstange auf, die mit dem Ritzel kämmt und mit derjenigen Schiene verbunden ist, die nicht das Ritzel trägt.

Die bekannte Längsführung vermag hohen, die Schienen voneinander trennenden Kräfte zu widerstehen. Sie hat zwei wechselseitige Umklammerungsbereiche, die eine hohe Ausreißfestigkeit sichern. Auf Grund dieser Umklammerungszonen, die jeweils aus wechselseitig ineinander gehakten, im Profil U-förmigen Leisten bestehen, ist die Herstellung der Schienen dieser bekannten Längsführung mit einem gewissen Aufwand verbunden, bei der Herstellung aus Stahlblech sind eine Anzahl von einzelnen Abbiegevorgängen, Prägevorgängen oder dergleichen notwendig. Da derartige oder auch andere Herstellungsverfahren der bekannten Längsführung gewisse Anforderungen stellen und sich im Preis der bekannten Längsführung niederschlagen, ist die bekannte Längsführung nur dann besonderes vorteilhaft, wenn eine hohe Ausreißfestigkeit gewünscht wird. Wird jedoch lediglich eine Längsführung benötigt, an deren Ausreißfestigkeit keine höheren Anforderungen gestellt werden, insbesondere weil beispielsweise andere Maßnahmen vorgesehen sind, um die bei sitzbefestigten Sicherheitsgurten bei einem Unfall auftretenden Kräfte in die Bodengruppe des Fahrzeugs übertragen zu können, so bietet die bekannte Längsführung nicht eine optimale und kostengünstige Problemlösung.

Dementsprechend ist es Aufgabe der vorliegenden Erfindung, die bekannte Längsführung dahingehend abzuwandeln und insbesondere zu vereinfachen, daß unter Beibehaltung des vorteilhaften, relativ großen Innenraums die Führungsbereiche einfacher ausgebildet sind und dementsprechend die Herstellung der Längsführung vereinfacht wird.

Diese Aufgabe wird ausgehend von der bekannten Längsführung der eingangs genannten Art dadurch gelöst, daß die beiden Führungsflansche der umgriffenen Schiene unmittelbar von den Enden der Arme dieser Schiene ausgehen und von dort in Richtung des jeweils anderen Arms dieser Schiene nach innen vorspringen und daß vorzugsweise in Nähe eines und nur eines Führungsflansches der umgriffenen Schiene ein Anschlag an der umgreifenden Schiene vorgesehen ist, der diesen Führungsflansch frei innenseitig übergreift und ein Einfedern dieses Führungsflansches nach innen hin und ein Ausfedern des gegenüberliegenden Armes nach außen hin begrenzt.

Die Profile dieser Längsführung sind dadurch wesentlich einfacher als diejenigen der bekannten Längsführung, daß die Führungsflansche unmittelbar von den Enden der umgriffenen Schiene nach innen vorspringen und daß diesen Führungsflanschen nicht, wie bei der bekannten Längsführung U-förmige Profilbereiche vorgeschaltet sind, wodurch bei der bekannten Längsführung die Führungsflansche der umgriffenen Schiene von innen nach außen, also in Gegenrichtung zur erfindungsgemäßen Längsführung, vorspringen.

Um nun eine gewisse Festigkeit gegen ein Ausreißen der umgriffenen Schiene aus der umgreifenden Schiene zu schaffen, ist erfindungsgemäß der Anschlag vorgesehen, der lediglich einem Führungsflansch, der im folgenden als gesicherter Führungsflansch bezeichnet wird, der umgriffenen Schiene zugeordnet ist. Gesichert wird dabei derjenige Führungsflansch des Führungsbereiches, der bei gewichtsmäßig belasteter Längsführung praktisch die gesamten, gewichtsbedingten Kräfte überträgt, wenn die Kräfte in Richtung eines Armes angreifen. Der Anschlag bewirkt, daß dieser gesicherte Führungsflansch nur ein kurzes Stück frei nach innen einfedern kann. Dadurch wird verhindert, daß schon bei schwächeren Zugbelastungen die Schienen auseinanderschnappen oder die Kugeln aus ihren Führungsrillen rutschen können. Der andere Führungsbereich muß jeweils nicht gesichert werden, da er bei Trennkräften der hier betrachteten Richtung zusammengepreßt wird. Er müßte vielmehr gegen ein Trennen bei hoher, gewichtsmäßiger Überlast gesichert werden, eine derartige Sicherung ist jedoch nicht nötig, da die Trennkräfte wesentlich größer sind als die maximalen Belastungskräfte.

In bevorzugter Ausbildung der Erfindung wird der Anschlag durch ein abgewinkeltes, insbesondere rundgebogenes Halteteil gebildet, das den gesicherten Führungsflansch innenseitig umgreift und vorzugsweise eine Leiste aufweist, die an der Innenseite des benachbarten Arms der umgreifenden Schiene befestigt, insbesondere angeschweißt ist. Diese Ausbildung ermöglicht besonders einfach und jeweils zu einer Diagonalen spiegelsymmetrische Profile der beiden Schienen, erfodert aber die Befestigung des Halteteils, das ein zusätzliches Teil ist.

In anderer, vorteilhafter Weiterbildung der Erfindung hat der gesicherte Führungsflansch eine Nase, die von dem Anschlag übergriffen wird. Dies ermöglicht eine wesentlich kleinere Ausbildung des Anschlags. Insbesondere kann der Anschlag als aus dem Material des benachbarten Arms der umgreifenden Schiene gebildete, durchgestanzte Krallenbereiche ausgebildet werden. Zwischen diesen durchgestanzten Krallenbereichen befinden sich unbearbeitete Bereiche des betreffenden Arms der umgreifenden Schiene. Diese können jedoch relativ kurz bemessen sein, da der betrachtete Arm der umgreifenden Schiene derjenige Arm ist, an dem die umgreifende Schiene befestigt wird, zum Beispiel an der Bodengruppe eines Fahrzeugs. Die durchgestanzten Krallenbereiche können dann relativ kurz und einfach ausgebildet werden, wenn am gesicherten Führungsflansch eine Nase vorgesehen ist. Grundsätzlich können sie aber auch diesen Führungsflansch selbst zumindest teilweise frei innenseitig übergreifen. Insgesamt wird ein zusätzliches Teil, wie es bei dem zuvor beschriebenen Ausführungsbeispiel in Form des Halteteils notwendig ist, vermieden. Das Gewicht dieses zusätzlichen Teils wird eingespart, ohne daß eine wesentlich geringere Ausreißfestigkeit in Kauf genommen werden muß.

Eine besonders günstige Ausbildung ergibt sich bei Anordnung einer motorgetriebenen Längsverstellvorrichtung innerhalb des Innenraums der Längsführung, bei der die Längsverstellvorrichtung in bekannter Weise eine Zahnstange aufweist. Diese, mit der umgriffenen Schiene verbundene Zahnstange kann als Anschlag verwendet werden, insbesondere wenn sie aus mindestens zwei parallelen Zahnleisten aufgebaut ist, von denen nur eine an der umgreifenden Schiene befestigt ist und die andere kürzer ausgebildet ist. Unter dieser kürzeren Zahnstange wird dabei eine Rille gebildet, in die eine Nase des gesicherten Führungsflansches frei eingreift. Diese Lösung bringt eine ausgezeichnete Materialeinsparung, zur Sicherung des Führungsbereichs ist lediglich eine kurze Nase notwendig, ein Zusatzteil oder ein Bearbeitungsvorgang für das Durchstanzen entfällt.

Schließlich ergeben sich besonders vorteilhafte Ausgestaltungen, wenn die Schienen, zumindest aber die umgreifende Schiene, im Strangpreßverfahren hergestellt werden. Dann kann ein einstückig von der Innenwand der umgreifenden Schiene nach innen vorspringendes Halteteil vorgesehen werden, das den gesicherten Führungsflansch oder auch nur eine Nase dieses Führungsflansches frei innenseitig übergreift. Auf Grund des Herstellungsvorganges im Strangpreßverfahren fallen zusätzliche Herstellungsvorgänge für den Anschlag nicht an, lediglich die Herstellung der Form, also des Strangpreßwerkzeuges, ist auf Grund der Notwendigkeit der Ausbildung des Anschlags etwas aufwendiger. Dies schlägt jedoch bei Serienfertigung praktisch nicht auf den Herstellungspreis durch. Unter diesen Umständen kann ohne großen zusätzlichen Aufwand auch der andere Führungsbereich durch einen Anschlag entsprechender Ausbildung gesichert werden. Alternativ oder zusätzlich kann auch ein Außenanschlag vorgesehen werden, der vom freien Ende des Führungsflansches der umgreifenden Schiene in Fortsetzung der Richtung dieses Führungsflansches vorspringt und eine nach außen weisende Nase der umgriffenen Schiene frei übergreift. Auf diese Weise läßt sich, insbesondere durch gezielte Anordnung von Anschlägen und zugehörigen Nasen eine ausgezeichnete Festigkeit gegen Ausreißen ausbilden, ohne daß dies zu einer wesentlichen Kostensteigerung, insbesondere einem deutlichen Mehrverbrauch an Material führt.

Weitere Vorteile und Merkmale der Erfindung ergeben sich aus den übrigen Ansprüchen sowie der nun folgenden Beschreibung bevorzugter Ausführungsbeispiele, die im folgenden im einzelnen unter Bezugnahme auf die Zeichnung und ohne einschränkend zu wirken beschrieben werden. In der Zeichnung zeigen:

Fig. 1 eine Stirnansicht einer Längsführung mit motorgetriebenen Längsverstellvorrichtung,

Fig. 2 eine Stirnansicht einer Längsführung mit einem zusätzlichen Halteteil als Anschlag,

Fig. 3 eine Stirnansicht einer Längsführung, bei der der gesicherte Führungsflansch eine Nase hat, die von durchgestanzten Krallenbereichen frei innenseitig übergriffen wird, und

Fig. 4 eine Stirnansicht einer Längsführung, bei der beide Schienen im Strangpreßverfahren hergestellt sind.

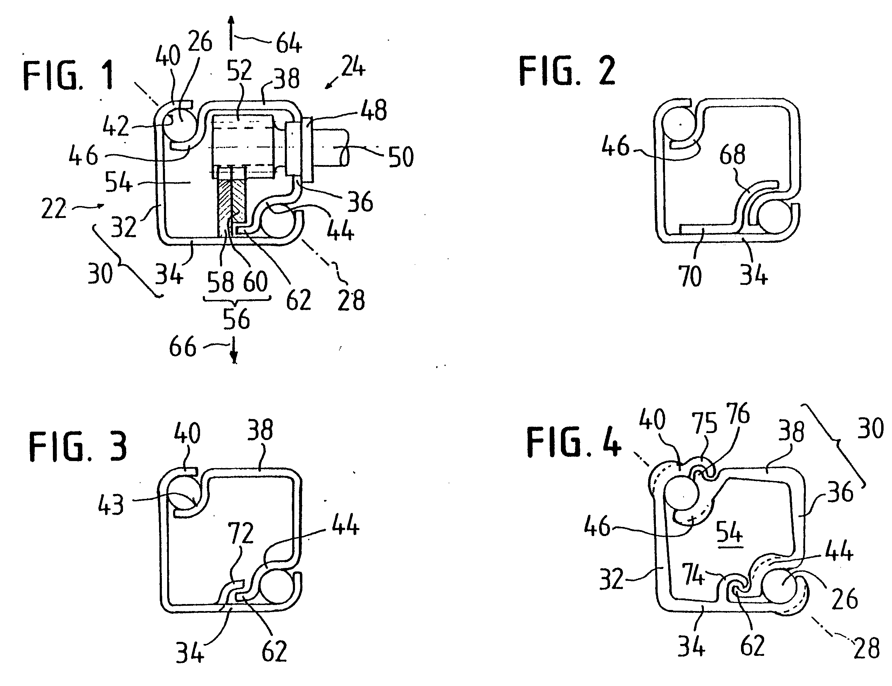

Die in Figur 1 gezeigte Längsführung besteht aus zwei länglichen, gegeneinander verschiebbaren und ineinander geführten Schienen 22, 24, nämlich der umgreifenden Schiene 22 und der umgriffenen Schiene 24. Sie stehen über zwei Reihen Kugeln 26, die auf einer Profildiagonalen 28 diagonal gegenüber liegen, miteinander in Verbindung. Weiterhin liegen sie unter Vorspannung aneinander.

Jede Schiene 22, 24 hat jeweils ein Winkelprofil 30 mit zwei rechtwinklig zueinander stehenden und gleichlangen Armen 32, 34 bzw. 36, 38. Am Ende jedes der beiden Arme 32, 34 der umgreifenden Schiene 22 springt ein Führungsflansch 40 rechtwinklig und in Richtung des jeweils anderen Arms 34 bzw. 32 vor. Seine Länge entspricht im wesentlichen dem Durchmesser der an ihm anliegenden Kugel 26. Er bildet zusammen mit dem Ende des Arms 32, 34, an dem er vorspringt, eine innenliegende Führungsrille 42 für die Kugel 26. Auch an der umgriffenen Schiene 24 springt am Ende jedes Arms 36, 38 ein Führungsflansch 44, 46 im rechten Winkel zum Arm vor, jedoch sind diese Führungsflansche 44, 46 über 90° abgebogen und springen zunächst nach innen und dann, in ihrem weiteren Verlauf, parallel zur Richtung des sie tragenden Arms 36, 38 in Richtung dieses Arms 36, 38 vor. Dadurch enden sie in einem gewissen Abstand vor der Innenwand eines Arms 32, 34 der umgreifenden Schiene 22.

Im Arm 36 der umgriffenen Schiene 24 ist eine Büchse 48 gehalten, die eine Antriebswelle 50 lagert, an der ein Ritzel 52 befestigt ist. Dieses befindet sich im Innenraum 54 der Längsführung. Weiterhin ist in diesem Innenraum 54 eine Zahnstange 56 angeordnet und am Arm 34 befestigt. Sie setzt sich aus zwei Zahnleisten 58, 60, die parallel zueinander verlaufen zusammen. Die in der Figur 1 linke Zahnleiste 58 ist etwas länger als die rechte Zahnleiste 60 und nur sie ist mit dem Arm 34 verbunden. Dagegen bleibt zwischen der Unterfläche der Zahnleiste 60 und dem Arm 34 ein Spalt frei, in den eine Nase 62 des Führungsflansches 44 frei eingreift. Die Unterkante der Zahnleiste 60 zusammen mit dem seitlich freien Teilbereich der Zahnleiste 58 bildet einen Anschlag für die Nase 62 des Führungsflansches 44 und verhindert, daß der Führungsflansch 44 über ein gewisses Maß hinaus, nämlich bis zum Anschlag an eine Zahnleiste 58, 60, nach innen einfedern kann. Ein derartiges Einfedern tritt dann auf, wenn an den beiden Schienen 22, 24 Trennkräfte in Richtung der Pfeile 64, 66 angreifen.

Wie aus Figur 1 ersichtlich ist, ist zwischen dem Ritzel 52 und dem Arm 38 lediglich ein geringer, beispielsweise unterhalb einem Millimeter liegender Luftspalt frei. Dadurch wird vermieden, daß dieser Arm 38 über ein gewisses Maß hinaus nach innen einfedern kann. Eine derartige Bewegung tritt sowohl bei einer gewichtsmäßigen Belastung (in Gegenrichtung der Pfeile 64, 66) als auch bei einer Zugbelastung in Richtung der Pfeile 64, 66 auf.

Insgesamt wird die umgriffene Schiene 24 durch die Einheit aus Ritzel 52 und Zahnstange 56 innen versteift, ihre Arme 36, 38 können also nur geringfügig nach innen einfedern, bis sie an das Ritzel 52 bzw. die Zahnstange 56 anschlagen. Dadurch wird einem Trennen der Schienen 22, 24 entgegengewirkt.

Das Ausführungsbeispiel nach Figur 2 entspricht im wesentlichen dem Ausführungsbeispiel nach Figur 1. Die Außenkanten des Profils auch dieser Längsführung beschreiben im wesentlichen ein Quadrat. Weiterhin ist nur einer der beiden Führungsflansche mit einem Anschlag versehen, der andere Führungsflansch der sich jeweils links oben befindet, ist ungesichert. Gegenüber dem Ausführungsbeispiel nach Figur 1 zeigt das Ausführungsbeispiel nach Figur 2 jedoch folgende Unterschiede : Der Führungsflansch 44 hat keine Nase, sondern ist wie der Führungsflansch 46 ausgebildet. Er wird jedoch von einem Anschlag in Form eines rundgebogenen Halteteils 68 innenseitig frei mit einem Luftspalt von beispielsweise einem Millimeter übergriffen. Dieses Halteteil 68 hat eine Leiste 70, die auf die Innenwand des Arms 34 aufgeschweißt ist. Insgesamt hat das Halteteil 68 die Form einer Schelle.

Im Ausführungsbeispiel nach Figur 3 sind dieselben Schienenprofile wie im Ausführungsbeispiel nach Figur 1 vorgesehen, d. h. der Führungsflansch 44 hat eine in Richtung des Arms 38 vorspringende Nase 62. Diese wird in Abweichung vom Ausführungsbeispiel nach Figur 1 frei übergriffen durch aus dem Material des Arms 34 gebildete, durchgestanzte Krallenbereiche 72, von denen mehrere in Längsrichtung der Schiene 22, unterbrochen durch unbearbeitete, kürzere Teilbereiche, vorgesehen sind.

Das Ausführungsbeispiel nach Figur 4 schließlich zeigt stranggepreßte Schienenprofile. Der gesicherte Führungsflansch 44 hat wiederum eine Nase 62, die zusätzlich auch leicht nach innen vorspringt. Sie wird übergriffen durch einen Anschlag in Form eines einstückig mit dem Arm 34 ausgeführten, nach innen vorspringenden Halteteiles 74, das die Nase 62 hakenförmig frei übergreift.

Der andere, links oben befindliche Führungsbereich der Längsführung gemäß Figur 4 ist ebenfalls gesichert. Hierzu springt am Führungsflansch 40 ein halbbogenförmiges Halteteil 75 in Verlängerung dieses Führungsflansches 40 vor, das eine nach außen vorspringende Nase 76 am Endbereich des Armes 38 außen frei übergreift.

Im gezeigten Ausführungsbeispiel nach Figur 4 sind diese beiden Arten der Verkrallung lediglich aus Gründen einer besser veständlichen Darstellung einmal nur am rechten unteren und einmal nur am linken oberen Führungsbereich ausgebildet. Die Verkrallung kann jedoch wahlweise an jedem Führungsbereich innen und/oder außen und unabhängig vom jeweils anderen Führungsbereich ausgebildet werden.

Schließlich ist noch darauf hinzuweisen, daß die Materialdicke der Arme 32, 34 bzw. 36, 38 ausgehend vom Verbindungsbereich und in Richtung des jeweiligen Arms 32 bis 36 geringer wird. Diese Ausbildung ist bei der Herstellung im Strangpreßverfahren einfach erreichbar und ermöglicht eine Materialeinsparung.

Wie aus Figur 4 ersichtlich ist, nimmt die Materialstärke des Profils im Übergangsbereich zwischen den Armen 32, 34, 36 bzw. 38 und den Führungsflanschen 40, 44 bzw. 46 stetig zu und erreicht ihr Maximum auf der Profildiagonalen 28. Dadurch befindet sich jeweils hinter den Auflagelinien, auf denen die Kugeln 26 abrollen, eine deutliche, im Ausführungsbeispiel etwa zweifache Materialverdickung, die ein Aufreißen der Schienen 22, 24 an auf der Profildiagonalen 28 verlaufenden Rißlinien und unter der Wirkung der belasteten Kugeln 26 deutlich erschwert. Ein derartiges Aufreißen kann bei unverdickten (gestrichelt eingezeichnet) Führungsbereichen auftreten. Wie Figur 4 zeigt, befinden sich die Materialverdickungen lediglich in unmittelbarer Nachbarschaft der Kugeln 26, sie laufen insbesondere im Bereich der Arme 32, 34 bereits da aus, wo auf der anderen Seite dieser Arme 32, 34 die Kugeln 26 enden. Es ist nicht nötig, alle vier Führungsrillen 42, 43 jeweils (von den Kugeln 26 gesehen außenliegend) zu verstärken. Verstärkt werden lediglich die Übergangsbereiche zwischen den Armen 32 bis 38 und den Führungsflanschen 40, 44, 46, bei denen je nach Einbauzustand die Gefahr besteht, daß ein Aufreißen der Schienen an den durch die Profildiagonale 28 bestimmten Stellen erfolgen kann. Weiterhin ist es nur notwendig, Längsführungen mit Profilverdickungen zu versehen, die tatsächlich im Sinne der Pfeile 64, 66 durch Zugkräfte belastet werden. Bei sitzbefestigten Sicherheitsgurten sind dies von den beiden Längsführungen eines Fahrzeugsitzes die jeweils innenliegenden (tunnelseitigen) Längsführungen, da bei einem Dreipunktgurt an ihnen wesentlich höher, unfallbedingte Kräfte angreifen als bei der jeweils außenliegenden Längsführung. Entsprechend werden auch die Verkrallungen der Führungsbereiche, also Halteteil 74 und Nase 62 bzw. Haltebereich 75 und Nase 76 dort vorgesehen, wo besonders hohe Trennkräfte auftreten können. Durch geeignete Kombination derartiger Verkrallungsbereiche und der beschriebenen Verdickungen ist es möglich, das in Figur 4 gezeigte Profil, hergestellt aus Aluminium, den jeweils unterschiedlichen Betriebserfordernissen anzupassen. In Figur 4 ist gestrichelt der Verlauf der Übergangsbereiche zwischen den Armen 32 bis 38 und den Führungsflanschen 40, 44, 46 eingezeichnet.

Das Halteteil 74 einer im Strangpreßverfahren hergestellten Schiene ähnlich Figur 4 kann anstelle der Nase 62 auch analog Figur 2 den Führungsflansch 44 frei übergreifen.

In einem weiteren, nicht dargestellten Ausführungsbeispiel ähnlich Figur 2 hat der gesicherte Führungsflansch 44 ebenfalls keine Nase 62 und wird von einem Halteteil 68 frei übergriffen, das direkt an einer Zahnstange 56 befestigt ist.

Im Ausführungsbeispiel nach Figur 1 hat es sich als besonders vorteilhaft erwiesen, die Zahnstange 56 nicht auf ihrer gesamten Länge (wie in Figur 1 gezeigt), sondern nur an einem Punkt mit der umgreifenden Schiene 22 zu verbinden. Die Nase 62 bewirkt dann zusammen mit dem Ritzel 52 eine Führung der Zahnstange 56, die unabhängig von Fertigungs- und Montagetoleranzen stets in die korrekte Lage bezüglich des Ritzels 52 gedrückt wird. Nach der Ausbildung gemäß Fig. 1 kann das Ritzel 52 nicht außer Eingriff mit der Zahnstange 56 gelangen, da es sich nicht weit genug nach oben bewegen kann, um von der Zahnstange 56 freizukommen : es stößt zuvor an der Innenfläche des Arms 38 an. In alternativer Ausbildung ist der Abstand zwischen der Innenfläche des Arms 38 und dem Ritzel größer gewählt, jedoch durch zwischengelegte Mittel beliebiger Art soweit reduziert, daß ein Spalt von beispielsweise 2 Millimetern frei bleibt. Auch kann an der Schiene 24 ein zusätzlicher Flansch so vorspringen, daß er das Ritzel 52 frei mit geringem Luftspalt übergreift. Zusätzlich kann gleichachsig zum Ritzel 52 eine im Durchmesser etwas größere Scheibe als das Ritzel 52 neben diesem angeordnet sein, die es vermeidet, daß das Ritzel 52 selbst an das sich unmittelbar oberhalb befindliche, mit der Schiene 24 verbundene Teil anschlägt. Wie alle Figuren zeigen, beträgt der Durchmesser der Kugel 26 etwa ein Viertel des lichten Innenabstandes zwischen den Armen 32, 36 bzw. 34, 38. Damit bleibt ein relativ großer Innenraum 54, der für Antriebsteile entsprechend der Ausführung gemäß Figur 1 oder dergleichen vorteilhaft eingesetzt werden kann.

**Patentansprüche**

1. Längsführung, insbesondere für Längsverstellvorrichtungen von Fahrzeugsitzen und vorzugsweise für motorgetriebene Längsverstellvorrichtungen, mit zwei länglichen, gegeneinander verschiebbaren und ineinander geführten Schienen (22, 24),
- die über zwei Reihen Wälzkörper, insbesondere Kugeln (26), welche auf einer Profildiagonalen (28) diametral gegenüberliegen, miteinander in Verbindung stehen und unter Vorspannung aneinanderliegen,
- von denen eine als umgriffene (24), die andere als umgreifende (22) Schiene ausgebildet ist,
- die jeweils ein Winkelprofil (30) mit im wesentlichen rechtwinklig zueinander stehenden und vorzugsweise gleichlangen Armen (32-38) aufweisen, wobei im Falle der umgreifenden Schiene (22) am Ende jedes Arms (32, 34) ein Führungsflansch (40) in Richtung des jeweils anderen Arms (34, 32) vorspringt und dadurch eine innenliegende Führungsrille (42) für Kugeln (26) einer Reihe ausgebildet wird und im Falle der umgriffenen Schiene (24) mit jedem Arm ein gebogener Führungsflansch (44, 46) mit einer außenliegenden Führungsrille (43) verbunden ist, und
- die gemeinsam einen nahezu rechteckförmigen Innenraum (54) umschließen,
dadurch gekennzeichnet, daß die beiden Führungsflansche (44, 46) der umgriffenen Schiene (24) unmittelbar von den Enden der Arme (36, 38) dieser Schiene (24) ausgehen und von dort in Richtung des jeweils anderen Arms (38, 36) dieser Schiene (24) nach innen vorspringen und daß insbesondere in Nähe eines und vorzugsweise nur eines Führungsflansches (44) der umgriffenen Schiene (24) ein Anschlag (56, 68, 72, 74) an der umgreifenden Schiene (22) vorgesehen ist, der den Führungsflansch (44) frei innenseitig übergreift und ein Einfedern dieses Führungsflansches (44) nach innen hin bzw. ein Ausfedern des Arms (34) nach außen hin begrenzt.

2. Längsführung nach Anspruch 1, dadurch gekennzeichnet, daß die Außenkanten des Profils der Längsführung ein Rechteck, vorzugsweise ein Quadrat, beschreiben.

3. Längsführung nach Anspruch 1 oder 2, dadurch gekennzeichnet, daß der Anschlag durch ein abgewinkeltes, insbesondere rundgebogenes Halteteil (68) gebildet ist, das den gesicherten Führungsflansch (44) innenseitig umgreift und vorzugsweise eine Leiste (70) aufweist, die an der Innenseite des benachbarten Arms (34) der umgreifenden Schiene (22) befestigt, insbesondere angeschweißt ist, oder daß der Führungsflansch (44) eine Nase (62) aufweist, die vorzugsweise parallel zu dem benachbarten Arm (34) vorspringt und frei von einem Anschlag (56, 68, 72, 74) übergriffen wird, wobei insbesondere der Anschlag als aus dem Material des benachbarten Arms (34) der umgreifenden Schiene (22) gebildete, durchgestanzte Krallenbereiche (72) ausgebildet ist.

4. Längsführung nach einem der Ansprüche 1 bis 3, mit einer im Innenraum angeordneten Zahnstange (56), dadurch gekennzeichnet, daß der Anschlag durch die Zahnstange (56), insbesondere eine Stufe in der Zahnstange (56), gebildet wird, insbesondere daß die Zahnstange (56) durch zwei parallele Zahnleisten (58, 60) zusammengesetzt ist, von denen eine (58), mit dem Arm (34) verbunden ist und länger ist als die andere, und daß die Unterfläche der kürzeren Zahnleiste (60) zusammen mit dem Seitenbereich der längeren Zahnleiste (58) den Anschlag bilden und/oder daß der lichte Abstand eines mit der Zahnstange (56) in Eingriff befindlichen Ritzels (52) zur Innenfläche des benachbarten Arms (38) oder eines anderen Teils der Schiene (24) gering ist, insbesondere unter zwei Millimetern liegt.

5. Längsführung nach Anspruch 1 oder 2, dadurch gekennzeichnet, daß die Schienen (22, 24), zumindest aber die umgreifende Schiene (22), stranggepreßt sind und daß die umgreifende Schiene (22) ein einstückig von Innenwand des Arms (34) nach innen vorspringendes Halteteil (74) aufweist, wobei insbesondere das Halteteil (74) eine Nase (62) des gesicherten Führungsflansches (44) oder einen Führungsflansch (44) ohne Nase frei innen übergreift.

6. Längsführung nach einem der Ansprüche 1 bis 5, dadurch gekennzeichnet, daß auch dem anderen Führungsflansch (46) ein Halteteil (74) zugeordnet ist.

7. Längsführung nach einem der Ansprüche 1 bis 6, dadurch gekennzeichnet, daß an mindestens einem Führungsflansch (40) der umgreifenden Schiene (22) ein außenliegender Haltebereich (75) in Richtung dieses Führungsflansches (40) vorspringt und hakenförmig eine Nase (76) am freien Ende des Arms (36 bzw. 38) der umgriffenen Schiene (24) von außen her frei umgreift.

8. Längsführung nach einem der Ansprüche 5 bis 7, dadurch gekennzeichnet, daß die Profildicke der Arme (32 bis 38) der Winkelprofile (30) ausgehend von ihrem gemeinsamen Verbindungsbereich in der jeweiligen Richtung dieser Arme (32 bis 38) hin abnimmt.

9. Längsführung nach einem der Ansprüche 5 bis 8, dadurch gekennzeichnet, daß das Profil der Führungsflansche (40) im Bereich der Führungsrillen (42) verstärkt ist.

10. Längsführung nach einem der Ansprüche 1 bis 9, dadurch gekennzeichnet, daß im Belastungsfall eine Zugkraft (Pfeile 64, 66) bzw. eine gewichtsmäßige Belastung parallel zu den Armen (vorzugsweise 32, 36) angreift.

## Claims

1. Longitudinal slide, in particular for longitudinal adjustment devices of vehicle seats, and preferably for motor driven longitudinal adjustment devices, with two elongated rails (22, 24) which are slidable in relation to one another and which are guided inside one another,

- which lie against one another under initial tension and are joined together via two rows of rolling members, in particular ball bearings (26) which lie diametrically opposite on a profile diagonal (28),

- one rail (24) of which is constructed so as to be gripped around, the other rail (22) of which is constructed so as to grip around,

- which have in each case an angled profile (30) with arms (32-38) which stand substantially at right angles to one another and which are preferably of equal length ; wherein, in the case of the rail (22) which grips around, at the end of each arm (32, 34) a guide flange (40) projects out in the direction of the other arm (34, 32) in each case, and thereby there is formed an interiorly located guide groove (42) for ball bearings (26) of a row, and in the case of the rail (24) which is gripped around, there is connected with each arm a bent guide flange (44, 46) with an outwardly located guide groove (43), and

- which jointly enclose an almost rectangular interior space (54), characterised in that the two guide flanges (44, 46) of the rail (24), which is gripped around, issue directly from the ends of the arms (36, 38) of this rail (24) and from there, project forwards inwardly in the direction of the other arm (38, 36) of this rail (24) in each case, and in that in particular in the vicinity of one and preferably only one guide flange (44) of the rail (24) which is gripped around, there is provided, on the rail (22) which grips around, a stop member (56, 68, 72, 74) which engages freely, on the inside, over the guide flange (44) and limits a springing in of this guide flange (44) towards the inside and/or a springing out of the arm (34) towards the outside.

2. Longitudinal slide according to claim 1, characterised in that the outside edges of the profile of the longitudinal slide describe a rectangle, preferably a square.

3. Longitudinal slide according to claim 1 or 2, characterised in that the stop member is formed by an angled, in particular a roundedly bent, holding part (68) which grips around the secured guide flange (44) on the inside and which preferably has a strip (70) which is secured, in particular welded, on the inside of the adjacent arm (34) of the rail (22) which grips around, or in that the guide flange (44) has a projection (62) which projects forwards preferably parallel to the adjacent arm (34) and over which freely engages a stop member (56, 68, 72, 74), wherein in particular the stop member is constructed in the form of claw- like regions (72) which are punched through, out of the material of the adjacent arm (34) of the rail (22) which grips around.

4. Longitudinal slide according to one of the claims 1 to 3, with a rack (56) arranged in the interior space, characterised in that the stop member is formed by the rack (56), in particular by a step in the rack (56), in particular that the rack (56) is composed of two parallel toothed strips (58, 60), one (58) of which is connected with the arm (34) and is longer than the other, and that the underside of the shorter toothed strip (60), together with the side region of the longer toothed strip (58), form the stop member, and/or that the inside space distance of a pinion (52), located in engagement with the rack (56), to the inside surface of the adjacent arm (38) or of another part of the rail (24) is small, in particular less than two millimetres.

5. Longitudinal slide according to claim 1 or 2, characterised in that the rails (22, 24), but at least the rail (22) which grips around, are continuously cast, and in that the rail (22), which grips around, has a holding part (74) which projects forwards towards the inside and is integral with the inside wall of the arm (34); wherein in particular the holding part (74) engages freely inwardly over a projection (62) of the secured guide flange (44) or over a guide flange (44) which has no projection.

6. Longitudinal slide according to one of the claims 1 to 5, characterised in that a holding part (74) is also associated with the other guide flange (46).

7. Longitudinal slide according to one of the claims 1 to 6, characterised in that on at least one guide flange (40) of the rail (22), which grips around, an outwardly located holding region (75) projects forward in the direction of this guide flange (40) and engages hook-shapedly, freely from the outside, over a projection (76) at the free end of the arm (36 and/or 38) of the rail (24) which is gripped around.

8. Longitudinal slide according to one of the claims 5 to 7, characterised in that the profile thickness of the arms (32 to 38) of the angled profile (30) decreases in the direction of these arms (32 to 38) in each case, starting out from their joint connecting region.

9. Longitudinal slide according to one of the claims 5 to 8, characterised in that the profile of the guide flange (40) is strengthened in the region of the guide grooves (42).

10. Longitudinal slide according to one of the claims 1 to 9, characterised in that in the case of loading, there engages a traction force (arrows 64, 66) and/or a loading proportionate to the weight, parallel to the arms (preferably 32, 36).

## Revendications

1. Glissière, notamment pour dispositifs de réglage longitudinal de sièges de véhicules et de préférence pour dispositifs motorisés de réglage longitudinal comportant deux profilés (22, 24) allongés, coulissant l'un par rapport à l'autre et guidés l'un dans l'autre,

- qui sont en liaison l'un avec l'autre par l'intermédiaire de deux rangées de corps de roulement, en particulier de billes (26) lesquelles sont diamétralement opposées sur une diagonale (28) du profilé, et qui sont appliqués l'un contre l'autre sous précontrainte,

- dont l'un (24) est le profilé guidé et l'autre (22) le profilé de guidage,

- qui sont constitués chacun par une cornière (30) aux branches (32, 38) à peu près perpendiculaires l'une à l'autre et de préférence de même longueur dans le cas du profilé de guidage (22), une bride de guidage (40) faisant saillie à l'extrémité de chaque branche (32, 34) en direction de l'autre branche (34, 32) et formant ainsi une rainure de guidage (42) interne pour les billes (26) d'une rangée, et dans le cas du profilé de guidage (24), une bride de guidage (44, 46) présentant une rainure de guidage (43) extérieure étant assemblée à chaque branche, et qui délimitent ensemble un volume intérieur (54) à peu près rectangulaire, caractérisée en ce que les deux brides de guidage (44, 46) du profilé guidé (24) partent directement des extrémités des branches (36, 38) de ce profilé (24) et à partir de là font saillie vers l'intérieur en direction de l'autre branche (38, 36) de ce profilé (24) et en ce qu'en particulier à proximité d'une bride de guidage (44) et de préférence une seule, du profilé guidé (24), une butée (56, 68, 72, 74) est prévue sur le profilé de guidage (22), butée qui passe librement, à l'intérieur, sur la bride de guidage (44), et limite un mouvement de ressort de cette bride de guidage (44) vers l'intérieur ou un mouvement de ressort vers l'extérieur de la branche (34).

2. Glissière selon la revendication 1, caractérisée en ce que les bords extérieurs de la cornière de la glissière décrivent un quadrilatère, de préférence un carré.

3. Glissière selon la revendication 1 ou 2, caractérisée en ce que la butée est formée par une pièce de maintien (68) coudée, en particulier courbée, qui entoure de l'intérieur la bride de guidage (44) protégée, et présente de préférence une baguette (70) qui est fixée, en particulier soudée, sur la face interne de la branche (34) voisine du profilé de guidage (22), ou en ce que la bride de guidage (44) présente un nez (62) qui fait saillie de préférence parallèlement à la branche (34) voisine et sur lequel passe librement une butée (56, 68, 72, 74), la butée étant constituée en particulier par des zones en griffes (72) découpées, formées dans le matériau de la branche (34) voisine du profilé de guidage (22).

4. Glissière selon l'une des revendications 1 à 3, comportant une crémaillère (56) disposée dans le volume intérieur, caractérisée en ce que la butée est formée par la crémaillère (56), en particulier par un cran de la crémaillère (56), en particulier en ce que la crémaillère est constituée de deux baguettes dentées (58, 60) parallèles dont l'une (58) est assemblée à la branche (34) et est plus longue que l'autre, et en ce que la face inférieure de la baguette dentée (60) la plus courte forme la butée avec la zone latérale de la baguette dentée (58) la plus longue et/ou en ce que l'écartement entre un pignon (52) engrenant avec la crémaillère (56) et la face interne de la branche (38) voisine ou d'une autre pièce du profilé (24), est petit, en particulier inférieur à deux millimètres.

5. Glissière selon la revendication 1 ou 2, caractérisée en ce que les profilés (22, 24), mais au moins le profilé de guidage (22) sont extrudés et en ce que le profilé de guidage (22) comporte un élément de maintien (74) faisant saillie d'une pièce vers l'intérieur, à partir de la paroi interne de la branche (34), l'élément de maintien (74) en particulier passant librement de l'intérieur sur un nez (62) de la bride de guidage (44) protégée, ou sur une bride de guidage (44) sans nez.

6. Glissière selon l'une des revendications 1 à 5, caractérisée en ce qu'un élément de maintien (74) est également associé à l'autre bride de guidage (46).

7. Glissière selon l'une des revendications 1 à 6, caractérisée en ce qu'un élément de maintien (75) extérieur fait saillie sur au moins une bride de guidage (40) du profilé de guidage (22), en direction de cette bride de guidage (40), et entoure librement de l'extérieur, à la manière d'un crochet, un nez (76) placé à l'extrémité libre de la branche (36 ou 38) du profilé guidé (24).

8. Glissière selon l'une des revendications 5 à 7, caractérisée en ce que l'épaisseur du profilé des branches (32 à 38) de la cornière (30) diminue à partir de leurs zones d'assemblage communes, dans la direction respective de ces branches (32 à 38).

9. Glissière selon l'une des revendications 5 à 8, caractérisée en ce que le profilé de la bride de guidage (40) est renforcé dans la zone des rainures de guidage (42).

10. Glissière selon l'une des revendications 1 à 9, caractérisée en ce que dans le cas d'une sollicitation, une force de traction (flèches 64, 66) ou une sollicitation sous la forme d'un poids agit parallèlement aux branches (de préférence 32, 36).

FIG. 1

FIG. 2

FIG. 3

FIG. 4

0 130 275